# EUROPEAN PATENT APPLICATION

(11) **EP 4 596 639 A1**
(43) Date of publication of application: **06.08.2025**
(21) Application number: 23871550.2
(22) Date of filing: 17.08.2023
(51) Int. Cl.: C09D 11/101

(54) **ACTIVE ENERGY RAY-CURABLE INK COMPOSITION**

(30) Priority: 30.09.2022 JP 2022157211
(71) Applicant: Osaka Soda Co., Ltd., Osaka-shi Osaka 550-0011 (JP)
(72) Inventor: MIYOSHI, Hirotsuna, Osaka-shi, Osaka 550-0011 (JP); KATAKAMI, Chiaki, Osaka-shi, Osaka 550-0011 (JP); OHASHI, Shinichiro, Osaka-shi, Osaka 550-0011 (JP); INOUE, Satoshi, Osaka-shi, Osaka 550-0011 (JP)
(74) Representative: Vossius & Partner Patentanwälte Rechtsanwälte mbB
(86) International application number: PCT/JP2023/029715
(87) International publication number: WO 2024/070308

(57) **Abstract**

The present invention provides an active energy ray-curable ink composition that has high misting resistance (scattering resistance) and further has high drying properties. The present invention relates to an active energy ray-curable ink composition containing a pigment (A); an allylic polymer (B) obtained by polymerizing an allylic compound represented by Formula (I) below; an ethylenically unsaturated compound (C); and a photoinitiator (D), the active energy ray-curable ink composition containing at least 5.0% by mass of the photoinitiator (D).

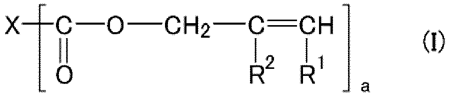

## Description

### TECHNICAL FIELD

The present invention relates to an active energy ray-curable ink composition.

### BACKGROUND ART

Various resin compositions that cure with light (for example, ultraviolet rays) have conventionally been used in inks, paints, adhesives, photoresists, and other applications. For example, active energy ray-curable ink compositions are highly evaluated for their features such as fast curing rate and short curing time, environmental friendliness due to no use of solvents, and resource and energy saving features. Therefore, they are becoming more and more widely used in practice.

Under such circumstances, active energy ray-curable ink compositions contain compounds that are curable by active energy rays (hereinafter, referred to as "active energy ray-curable compounds"), such as acrylic ester compounds. Thus, when exposed to active energy rays, the ink compositions are instantly cured to form a tough film by three-dimensional crosslinking of the active energy ray-curable compounds. Moreover, because the ink compositions cure instantly, post-processing can be performed immediately after printing. Owing to these advantages, active energy ray-curable ink compositions have been suitably used in applications where strong films are required for improved productivity and design protection, such as packaging printing for packaging materials, and form printing in the commercial field.

In general, active energy ray-curable ink compositions (hereinafter, also referred to simply as "inks") are required to have printability, including emulsifying properties, scumming resistance, and initial concentration stability. In addition to the printability, the inks are also required to have not only printed film properties such as curability, gloss, and adhesion, but also printed film strength such as abrasion resistance and solvent resistance.

Typical active energy ray-curable ink compositions contain binders and pigments as solid components. The binders mean components that can form a film. The binders contain resin components (referred to as binder resins), including resins and active energy ray-curable compounds such as acrylic ester compounds, and photoinitiators, and optionally various additives. Moreover, unsaturated polyester resins, epoxy acrylate resins, urethane acrylate resins, polyester acrylate resins, and other resins have been studied as binder resins for active energy ray-curable ink compositions in order to meet the above requirements.

For example, Patent Literature 1 discloses a binder resin obtained by modifying a saturated polyester with an isocyanate group-containing urethane acrylate.

For example, another proposed active energy ray-curable ink composition is an active energy ray-curable lithographic offset printing ink composition that contains 30% of an acrylate adduct of a disproportionated rosin alkyd resin obtained by reacting 133 parts of a disproportionated rosin, 133 parts of benzoic acid, 130 parts of phthalic acid, and 173 parts of trimethylolpropane, 59.9% of dipentaerythritol hexacrylate, and 0.1% of hydroquinone (see, for example, Example 1 in Patent Literature 2).

### CITATION LIST

### PATENT LITERATURE

Patent Literature 1: JP 2001-348516 A
Patent Literature 2: JP 2007-231220 A

### SUMMARY OF INVENTION

### TECHNICAL PROBLEM

From the perspective of high-speed printing and large-volume printing, such active energy ray-curable ink compositions require improved misting resistance (scattering resistance). However, the studies of the present inventors have revealed that the active energy ray-curable ink compositions described above have insufficient misting resistance (scattering resistance).

The present invention aims to solve the new problem discovered by the present inventors and provide an active energy ray-curable ink composition that has high misting resistance and further has high drying properties.

### SOLUTION TO PROBLEM

As a result of extensive studies, the present inventors have found that an active energy ray-curable ink composition with high misting resistance contains a pigment (A), an allylic polymer (B) obtained by polymerizing an allylic compound represented by Formula (I), an ethylenically unsaturated compound (C), and a specific amount of a photoinitiator (D). The present inventors have thus arrived at the present invention.

Specifically, Embodiment 1 of the present invention relates to an active energy ray-curable ink composition, containing:
at least one pigment (A);
at least one allylic polymer (B) obtained by polymerizing at least one allylic compound represented by Formula (I) below;
at least one ethylenically unsaturated compound (C); and
at least one photoinitiator (D),
the active energy ray-curable ink composition containing at least 5.0% by mass of the photoinitiator (D), 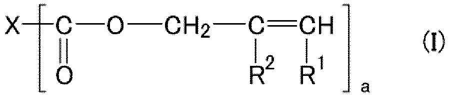
wherein R¹ and R² each represent H or CH₃;
X represents an α-valent alicyclic hydrocarbon group or an α-valent aromatic hydrocarbon group; and
a represents 2 or 3.

Embodiment 2 of the present invention relates to the active energy ray-curable ink composition according to Embodiment 1 of the present invention,
wherein the photoinitiator (D) includes at least one Type I photoinitiator (d-1) and at least one Type II photoinitiator (d-2).

Embodiment 3 of the present invention relates to the active energy ray-curable ink composition according to Embodiment 2 of the present invention,
wherein the Type I photoinitiator (d-1) is at least one selected from the group consisting of α-hydroxyalkylphenone photoinitiators, α-aminoalkylphenone photoinitiators, and acylphosphine oxide photoinitiators, and
the Type II photoinitiator (d-2) is at least one selected from the group consisting of benzophenone photoinitiators, thioxanthone photoinitiators, and ketosulfone photoinitiators.

Embodiment 4 of the present invention relates to the active energy ray-curable ink composition according to any one of Embodiments 1 to 3 of the present invention, further containing at least one co-photoinitiator (d-3).

Embodiment 5 of the present invention relates to the active energy ray-curable ink composition according to any one of Embodiments 1 to 4 of the present invention,
wherein X in Formula (I) has any of the following cyclic backbones:

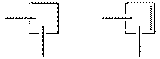

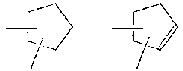

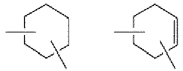

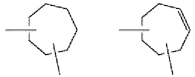

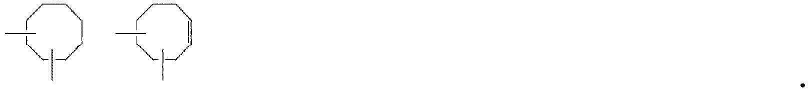

Embodiment 6 of the present invention relates to the active energy ray-curable ink composition according to any one of Embodiments 1 to 4 of the present invention,
wherein X in Formula (I) is a C6-C20 aromatic hydrocarbon group.

Embodiment 7 of the present invention relates to the active energy ray-curable ink composition according to any one of Embodiments 1 to 4 of the present invention,
wherein X in Formula (I) has the following cyclic backbone:

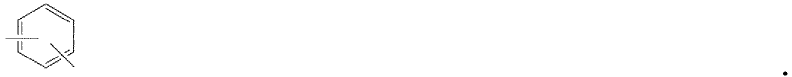

### ADVANTAGEOUS EFFECTS OF INVENTION

The active energy ray-curable ink composition of the present invention contains a pigment (A), an allylic polymer (B) obtained by polymerizing an allylic compound represented by Formula (I), an ethylenically unsaturated compound (C), and a photoinitiator (D), and the amount of the photoinitiator (D) in the ink composition is adjusted to be within a predetermined range. Thus, the active energy ray-curable ink composition has high misting resistance and further has high drying properties.

### DESCRIPTION OF EMBODIMENTS

The present invention is described in detail below.

The reason for the above-described advantageous effect of the active energy ray-curable ink composition is believed to be as follows.

The allylic polymer (B) obtained by polymerizing an allylic compound represented by Formula (I) has high misting resistance and high drying properties. When the allylic polymer (B) obtained by polymerizing an allylic compound represented by Formula (I) is incorporated with the pigment (A), the ethylenically unsaturated compound (C), and a specific amount of the photoinitiator (D), higher misting resistance and drying properties can be obtained.

### Pigment (A)

Any pigment may be used in the active energy ray-curable ink composition of the present invention. Organic or inorganic pigments may be used alone or in admixture of two or more. Preferred among pigments are pigments having high color developing properties and high heat resistance, typical examples of which include, but are not limited to, organic pigments. Since a basic polar functional group and/or an acidic polar functional group is generally present in a pigment, as described above, pigments having a basic polar functional group and/or an acidic polar functional group are particularly preferred.

Non-limiting examples of pigments that may be used in the present invention include soluble azo pigments, insoluble azo pigments, phthalocyanine pigments, halogenated phthalocyanine pigments, quinacridone pigments, isoindolinone pigments, isoindoline pigments, perylene pigments, perinone pigments, dioxazine pigments, anthraquinone pigments, dianthraquinonyl pigments, anthrapyrimidine pigments, anthanthrone pigments, indanthrone pigments, flavanthrone pigments, pyranthrone pigments, and diketopyrrolopyrrole pigments.

Further, specific examples of those indicated by the color index generic name include

Pigment Black 7; blue pigments such as Pigment Blue 15, Pigment Blue 15:1, Pigment Blue 15:3, Pigment Blue 15:4, Pigment Blue 15:6, Pigment Blue 22, Pigment Blue 60, and Pigment Blue 64;
green pigments such as Pigment Green 7, Pigment Green 36, and Pigment Green 58;
red pigments such as Pigment Red 9, Pigment Red 48, Pigment Red 49, Pigment Red 52, Pigment Red 53, Pigment Red 57, Pigment Red 97, Pigment Red 122, Pigment Red 123, Pigment Red 144, Pigment Red 146, Pigment Red 149, Pigment Red 166, Pigment Red 168, Pigment Red 177, Pigment Red 178, Pigment Red 179, Pigment Red 180, Pigment Red 185, Pigment Red 192, Pigment Red 202, Pigment Red 206, Pigment Red 207, Pigment Red 209, Pigment Red 215, Pigment Red 216, Pigment Red 217, Pigment Red 220, Pigment Red 221, Pigment Red 223, Pigment Red 224, Pigment Red 226, Pigment Red 227, Pigment Red 228, Pigment Red 238, Pigment Red 240, Pigment Red 242, Pigment Red 254, and Pigment Red 255;
violet pigments such as Pigment Violet 19, Pigment Violet 23, Pigment Violet 29, Pigment Violet 30, Pigment Violet 37, Pigment Violet 40, and Pigment Violet 50;
yellow pigments such as Pigment Yellow 12, Pigment Yellow 13, Pigment Yellow 14, Pigment Yellow 17, Pigment Yellow 20, Pigment Yellow 24, Pigment Yellow 74, Pigment Yellow 83, Pigment Yellow 86, Pigment Yellow 93, Pigment Yellow 94, Pigment Yellow 95, Pigment Yellow 109, Pigment Yellow 110, Pigment Yellow 117, Pigment Yellow 120, Pigment Yellow 125, Pigment Yellow 128, Pigment Yellow 137, Pigment Yellow 138, Pigment Yellow 139, Pigment Yellow 147, Pigment Yellow 148, Pigment Yellow 150, Pigment Yellow 151, Pigment Yellow 153, Pigment Yellow 154, Pigment Yellow 155, Pigment Yellow 166, Pigment Yellow 168, Pigment Yellow 180, Pigment Yellow 185, and Pigment Yellow 213;
orange pigments such as Pigment Orange 13, Pigment Orange 36, Pigment Orange 37, Pigment Orange 38, Pigment Orange 43, Pigment Orange 51, Pigment Orange 55, Pigment Orange 59, Pigment Orange 61, Pigment Orange 64, Pigment Orange 71, and Pigment Orange 74; and
brown pigments such as Pigment Brown 23, Pigment Brown 25, and Pigment Brown 26.

Moreover, Pigment Black 7 may be any carbon black, such as neutral, acidic, or basic carbon black. Acidic carbon black is preferred among these. Examples of usable white pigments include titanium oxide and zinc oxide.

Besides these pigments, dyes may be used in the active energy ray-curable ink composition. In particular, Food Reds 3, 3:1, 7, 9, 17, and 17:1, Food Blues 2 and 2:1, Food Yellow 3, Food Blacks 1 and 2, Food Blown 3, etc. are preferred in view of safety.

The amount of pigments (A) contained in the active energy ray-curable ink composition is preferably in the range of 5 to 65% by mass in order to ensure a satisfactory color gamut of the printed matter. The lower limit is more preferably 10% by mass or more. The upper limit is more preferably 60% by mass or less, still more preferably 55% by mass or less, particularly preferably 40% by mass or less, most preferably 30% by mass or less.

### Allylic polymer (B)

The active energy ray-curable ink composition of the present invention is characterized by containing an allylic polymer (B) obtained by polymerizing an allylic compound represented by the following Formula (I): 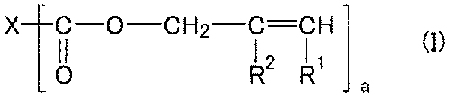 wherein R¹ and R² each represent H or CH₃; X represents an α-valent alicyclic hydrocarbon group or an a-valent aromatic hydrocarbon group; and a represents 2 or 3. Such allylic polymers (B) may be used alone or in admixture of two or more.

X in Formula (I) is either an α-valent alicyclic hydrocarbon group or an α-valent aromatic hydrocarbon group. X in Formula (I) is preferably an a-valent alicyclic hydrocarbon group because it is highly compatible with an ethylenically unsaturated compound.

### (i) α-valent alicyclic hydrocarbon group

When X in Formula (1) is an α-valent alicyclic hydrocarbon group, it preferably has 3 to 18 carbon atoms, more preferably 4 to 12 carbon atoms, particularly preferably 4 to 8 carbon atoms.

The α-valent alicyclic hydrocarbon group may be a saturated α-valent alicyclic hydrocarbon group or may partially have unsaturated bonds. In the present invention, the term "alicyclic" refers to a hydrocarbon group having a cyclic structure without aromaticity.

In the α-valent alicyclic hydrocarbon group as X in Formula (I), a is preferably 2 or 3, more preferably 2.

Moreover, the α-valent alicyclic hydrocarbon group may have an alkyl group. The alkyl group may be a linear or branched C1-C10, preferably C1-C5, alkyl group, more preferably a methyl group or an ethyl group. One or two or more alkyl groups may be present at substitutable positions in the alicyclic hydrocarbon group. Here, the a-valent alicyclic hydrocarbon group may not necessarily have an alkyl group. The α-valent alicyclic hydrocarbon group preferably has no substituent.

When X in Formula (I) is an α-valent alicyclic hydrocarbon group, X preferably has an unsubstituted saturated or partially unsaturated four- to eight-membered cyclic backbone.

When X in Formula (I) is an α-valent alicyclic hydrocarbon group, preferred examples of X in Formula (I) include those having the following cyclic backbones:

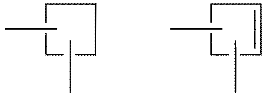

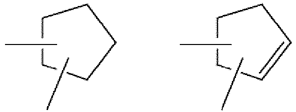

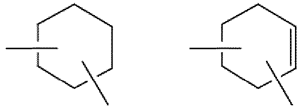

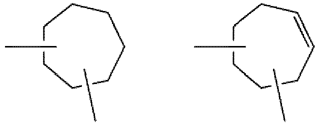

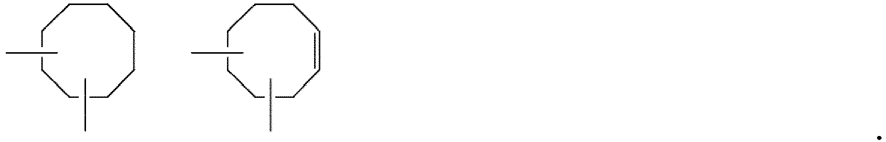

When X in Formula (I) is an α-valent alicyclic hydrocarbon group, more preferred examples of X in Formula (I) include those having the following cyclic backbones:

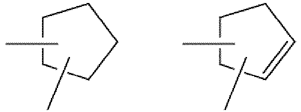

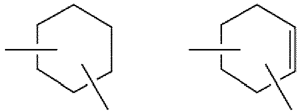

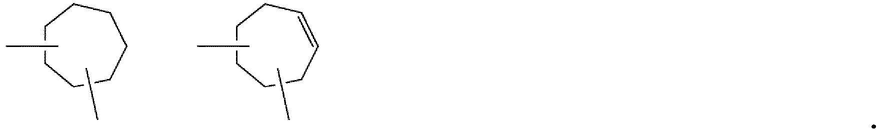

When X in Formula (I) is an α-valent alicyclic hydrocarbon group, still more preferred examples of X in Formula (I) include those having the following cyclic backbones:

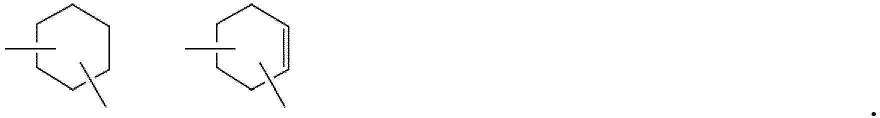

X can be of various types and may have a cyclic backbone other than those described above. When X has a partially unsaturated cyclic backbone, the number of double bonds in the cyclic backbone is not limited to one and may be two or more.

X may be intramolecularly crosslinked. Examples of the intramolecularly crosslinked X include adamantane, norbornene, and norbornane.

X is an α-valent group where a is 2 or 3 and is therefore a bivalent or trivalent group. A number a (2 or 3) of allyl ester groups [-CO-O-CH₂-CR²=CHR¹] shown in Formula (I) are bound to the cyclic backbone of X. In the ally ester group shown in Formula (I), R¹ is H or CH₃, and R² is H or CH₃.

The positions substituted by allyl ester groups [-COO-CH₂-CR²=CHR¹] on the ring of X may be in any combination. A mixture of allylic compounds with different combinations of substitution positions may be used. Particularly when two allyl ester groups are bound to a six-membered ring X, the two allyl ester groups may be in the ortho, meta, or para orientation, preferably in the ortho or para orientation, more preferably in the ortho orientation.

Specific examples of the allylic compound represented by Formula (I) include diallyl 1,2-cyclohexanedicarboxylate, diallyl 1,3-cyclohexanedicarboxylate, diallyl 1,4-cyclohexanedicarboxylate, diallyl 4-cyclohexene-1,2-dicarboxylate, and diallyl 2-cyclohexene-1,2-dicarboxylate. Among these, diallyl 1,2-cyclohexanedicarboxylate, diallyl 4-cyclohexene-1,2-dicarboxylate, and diallyl 1,4-cyclohexanedicarboxylate are preferred, with diallyl 1,2-cyclohexanedicarboxylate being more preferred.

### (ii) α-valent aromatic hydrocarbon group

When X in Formula (I) is an α-valent aromatic hydrocarbon group, it is preferably a C6-C20 aromatic hydrocarbon group, more preferably a C6-C12 aromatic hydrocarbon group.

In the α-valent aromatic hydrocarbon group as X in Formula (I), a is preferably 2 or 3, more preferably 2.

Moreover, the α-valent aromatic hydrocarbon group may have an alkyl group. The alkyl group may be a linear or branched C1-C10, preferably C1-C5, alkyl group, more preferably a methyl group or an ethyl group. One or two or more alkyl groups may be present at substitutable positions in the aromatic hydrocarbon group. Here, the a-valent aromatic hydrocarbon group may not necessarily have an alkyl group. The α-valent aromatic hydrocarbon group preferably has no substituent.

When X in Formula (I) is an α-valent aromatic hydrocarbon group, X preferably has an unsubstituted aromatic six- to eight-membered cyclic backbone.

When X in Formula (I) is an a-valent aromatic hydrocarbon group, preferred examples of X in Formula (I) include those having the following cyclic backbone:

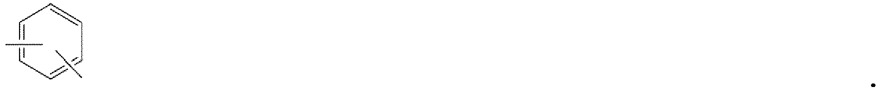

When X in Formula (I) is an α-valent aromatic hydrocarbon group, the positions substituted by allyl ester groups (COOCH₂CH=CH₂) on the ring may be in any combination. A mixture of combinations of substitution positions may also be used. Particularly when two COOCH₂CH=CH₂ groups are bound to a six-membered ring, the two COOCH₂CH=CH₂ groups may be in the ortho, meta, or para orientation, preferably in the ortho or meta orientation.

When X in Formula (I) is an α-valent aromatic hydrocarbon group, specific examples of the allyl compound include diallyl phthalate and diallyl isophthalate.

An allylic polymer (B) obtained by polymerizing at least one selected from the group consisting of the above-described allylic compounds may be used in the active energy ray-curable ink composition. Further, those produced by copolymerizing an allylic compound represented by Formula (I) with other polymerizable compounds may also be used in the active energy ray-curable ink composition.

The specific examples of allylic compounds represented by Formula (I) may be produced, for example, by an esterification reaction between cyclohexanedicarboxylic acid or cyclohexanedicarboxylic anhydride and allyl alcohol or allyl chloride, or by an esterification reaction between cyclohexenedicarboxylic acid or cyclohexenedicarboxylic anhydride and allyl alcohol or allyl chloride.

Commercial products of the specific examples of allylic compounds represented by Formula (I) may also be used.

An allylic compound represented by Formula (I) may also be produced, for example, by the method described in JP 2019-19291 A.

An allylic compound represented by Formula (I) can be polymerized by any method, including usual polymerization reactions. An appropriate polymerization initiator, if needed, may be added in the polymerization reaction. The use of the polymerization initiator enables the production of a higher molecular weight polymer in a short time.

Examples of polymerization initiators that may be used in the polymerization reaction of the allylic compound include azo initiators such as azobisisobutyronitrile and dimethyl 2,2'-azobisisobutyrate; and peroxide initiators such as ketone peroxides, peroxy ketals, hydroperoxides, dialkyl peroxides, diacyl peroxides, peroxy dicarbonates, peroxy esters, and benzoyl peroxide.

The amount of polymerization initiators per 100 parts by mass of the amount of allylic compounds represented by Formula (I) as monomers is preferably 5.0 parts by mass or less, more preferably 3.0 parts by mass or less. Moreover, the amount is particularly preferably 0.001 to 3.0 parts by mass.

The reaction temperature during the polymerization is preferably 60°C to 240°C, for example, 80°C to 220°C. The reaction time is preferably 0.1 to 100 hours, for example, 1 to 30 hours.

An allylic compound represented by Formula (I) may be polymerized as described above or by other methods to prepare an allylic polymer (A) having monomer units derived from the allylic compound represented by Formula (I).

An allylic polymer (A) may also be produced, for example, by the method described in JP 2019-19291 A.

The amount of monomer units derived from allylic compounds represented by Formula (I), based on 100% by mass of the allylic polymer (B), is preferably 20% by mass or more, more preferably 50% by mass or more, still more preferably 80% by mass or more, particularly preferably 98% by mass or more, and may be 100% by mass.

The weight average molecular weight of the allylic polymer (B) is preferably 300,000 or less, more preferably 200,000 or less. Moreover, the weight average molecular weight is still more preferably 2,000 to 150,000, particularly preferably 5,000 to 140,000.

The weight average molecular weight of the allylic polymer (B) can be determined by the method described in Examples.

In the active energy ray-curable ink composition of the present invention, the amount of allylic polymers (B) based on the total amount of the active energy ray-curable ink composition is preferably 1 to 60% by mass, more preferably 1 to 55% by mass, still more preferably 1 to 50% by mass. The lower limit is preferably 5% by mass or more, while the upper limit is particularly preferably 40% by mass or less, most preferably 30% by mass or less. If the amount of allylic polymers (B) is more than 60% by mass, the solubility in the ethylenically unsaturated compound (C) may deteriorate and the viscosity may also increase, resulting in poor handleability. If the amount of allylic polymers (B) is less than 1% by mass, the resulting active energy ray-curable ink composition may not have sufficient drying properties.

### Ethylenically unsaturated compound (C)

The active energy ray-curable ink composition of the present invention preferably contains an ethylenically unsaturated compound (C) which can be cured by exposure to light. The ethylenically unsaturated compound (C) preferably has 1 to 20, more preferably 1 to 10, still more preferably 2 to 6 carbon-carbon double bonds. Examples of the ethylenically unsaturated compound (C) include (meth)acrylic acid ester compounds, (meth)allyl compounds, and vinyl compounds. Moreover, such ethylenically unsaturated compounds may be used alone, or a mixture of two or more of such compounds may be used.

Examples of the (meth)acrylic acid ester compounds include (meth)acrylic acid ester compounds of alcohols such as pentaerythritol, dipentaerythritol, trimethylolpropane, ditrimethylolpropane, neopentyl glycol, 1,6-hexanediol, glycerol, polyethylene glycol, and polypropylene glycol, and adducts of these (meth)acrylic acid ester compounds with alkylene oxides such as ethylene oxide or propylene oxide; (meth)acrylic acid ester compounds formed of adducts of alkylene oxides such as ethylene oxide or propylene oxide with bisphenols such as bisphenol A or bisphenol F; (meth)acrylic acid ester compounds such as epoxy (meth)acrylates, urethane (meth)acrylates, and alkyd (meth)acrylates; and (meth)acrylic acid ester compounds such as epoxidized soybean oil acrylates. Preferred are (meth)acrylic acid ester compounds of alcohols such as pentaerythritol, dipentaerythritol, trimethylolpropane, ditrimethylolpropane, neopentyl glycol, 1,6-hexanediol, glycerol, polyethylene glycol, and polypropylene glycol, and adducts of these (meth)acrylic acid ester compounds with alkylene oxides such as ethylene oxide or propylene oxide. More preferred are (meth)acrylic acid ester compounds of alcohols such as pentaerythritol, dipentaerythritol, trimethylolpropane, and ditrimethylolpropane, and adducts of these (meth)acrylic acid ester compounds with alkylene oxides such as ethylene oxide or propylene oxide.

Examples of the (meth)allyl compounds include di(meth)allyl phthalates and tri(meth)allyl isocyanurates.

Examples of the vinyl compounds include styrene, divinylbenzene, N-vinylpyrrolidone, and vinyl acetate.

In particular, in view of compatibility with the allylic polymer (B) and curability in photo-curing, alkylene oxide adducts of pentaerythritol tetraacrylate or glycerol triacrylate are preferred, with alkylene oxide adducts of pentaerythritol tetraacrylate being more preferred.

The amount of ethylenically unsaturated compounds (C) contained in the active energy ray-curable ink composition of the present invention is preferably 50 to 400 parts by mass, more preferably 50 to 300 parts by mass, still more preferably 50 to 275 parts by mass, per 100 parts by mass of the amount of allylic polymers (B) in the active energy ray-curable ink composition.

### Photoinitiator (D)

The active energy ray-curable ink composition of the present invention contains a photoinitiator. Such photoinitiators may be used alone or in admixture of two or more. Examples of photoinitiators that may be used in the present invention include, but are not limited to, known photoinitiators. A specific example is preferably a combination of a Type I photoinitiator (d-1) and a Type II photoinitiator (d-2). This tends to provide higher misting resistance and drying properties.

In order to obtain higher drying properties, the amount of photoinitiators (D) contained in the active energy ray-curable ink composition, based on the total amount of the active energy ray-curable ink composition, may be 5.0% by mass or more, preferably 5.4% by mass or more, more preferably 5.6% by mass or more, still more preferably 5.8% by mass or more, particularly preferably 6.0% by mass or more, most preferably 6.2% by mass or more, further most preferably 6.5% by mass or more. The upper limit of the amount of photoinitiators (D) in the active energy ray-curable ink composition is not particularly limited, but for example, the amount may be 15% by mass or less, preferably 14% by mass or less, more preferably 13% by mass or less. This tends to provide higher misting resistance and drying properties.

### Type I photoinitiator (d-1)

Examples of the Type I photoinitiator (d-1) include α-hydroxyalkylphenone photoinitiators, α-aminoalkylphenone photoinitiators, and acylphosphine oxide photoinitiators. Such Type I photoinitiators (d-1) may be used alone or in combinations of two or more.

Examples of the α-hydroxyalkylphenone photoinitiators include 2-hydroxy-1-{4-[4-(2-hydroxy-2-methyl-propionyl)-benzyl]-phenyl}-2-methyl-propan-1-one (number average molecular weight: 340), oligo(2-hydroxy-2-methyl-1-[4-(1-methylvinyl)phenyl]propanone) (number average molecular weight: 424), and 2-hydroxy-1-{4-[4-(2-hydroxy-2-methylpropionyl)phenoxy]phenyl}-2-methylpropanone (number average molecular weight: 342). At least one of these photoinitiators is usable and a plurality of them may be used in combination. Preferred among these are 2-hydroxy-1-{4-[4-(2-hydroxy-2-methylpropionyl)phenoxy]phenyl}-2-methylpropanone and bis(2,4,6-trimethylbenzoyl)phenylphosphine oxide, with 2-hydroxy-1-{4-[4-(2-hydroxy-2-methylpropionyl)phenoxy]phenyl}-2-methylpropanone being more preferred. In view of misting resistance and low migration, α-hydroxyalkylphenone photoinitiators having a number average molecular weight of 300 or more are preferred. Those having a number average molecular weight of 1500 or less are also usable.

Herein, the number average molecular weights of the photoinitiators are measured by gel permeation chromatography (GPC).

Examples of the α-aminoalkylphenone photoinitiators include 2-methyl-1-(4-methylthiophenyl)-2-morpholinopropan-1-one (number average molecular weight: 279), 1-([1,1'-biphenyl]-4-yl)-2-methyl-2-morpholinopropan-1-one (number average molecular weight: 309), 2-benzyl-2-dimethylamino-1-(4-piperidinophenyl)-butan-1-one (number average molecular weight: 364), 2-(dimethylamino)-1-(4-morpholinophenyl)-2-benzyl-1-butanone (number average molecular weight: 366), 2-(dimethylamino)-2-(4-methyl-benzyl)-1-(4-morpholin-4-yl-phenyl)-butan-1-one (number average molecular weight: 380), and 1-(9,9-dibutyl-9H-fluoren-2-yl)-2-methyl-2-morpholinopropan-1-one (average molecular weight: 434). At least one of these photoinitiators is usable and a plurality of them may be used in combination. In view of misting resistance and low migration, α-aminoalkylphenone photoinitiators having a number average molecular weight of 300 or more are preferred. Those having a number average molecular weight of 1500 or less are also usable.

Examples of the acylphosphine oxide photoinitiators include 2,4,6-trimethylbenzoyl-diphenylphosphine oxide, bis(2,6-dimethoxybenzoyl)-2,4,4-trimethyl-pentylphosphine oxide, and bis(2,4,6-trimethylbenzoyl)-phenylphosphine oxide. At least one of these photoinitiators is usable and a plurality of them may be used in combination. Bis(2,4,6-trimethylbenzoyl)-phenylphosphine oxide is preferred among these. In view of misting resistance and low migration, acylphosphine oxide photoinitiators having a number average molecular weight of 300 or more are preferred. Those having a number average molecular weight of 1500 or less are also usable.

Among these Type I photoinitiators (d-1), α-hydroxyalkylphenone photoinitiators are preferred in view of the drying properties of the coated film, misting resistance, low migration, etc., and acylphosphine oxide photoinitiators are preferred in view of the inner curability of the coated film. More preferred are combinations of α-hydroxyalkylphenone photoinitiators and acylphosphine oxide photoinitiators. When a combination of an α-hydroxyalkylphenone photoinitiator and an acylphosphine oxide photoinitiator is used, the α-hydroxyalkylphenone photoinitiator:acylphosphine oxide photoinitiator ratio (by mass) may be 10:90 to 90:10 and is preferably 20:80 to 80:20.

### Type II photoinitiator (d-2)

Examples of the Type II photoinitiator (d-2) include benzophenone photoinitiators, thioxanthone photoinitiators, and ketosulfone photoinitiators. Such Type II photoinitiators (d-2) may be used alone or in combinations of two or more.

Examples of the benzophenone photoinitiators include benzophenone compounds such as benzophenone, methyl o-benzoylbenzoate, 4-phenylbenzophenone, 4,4'-dichlorobenzophenone, hydroxybenzophenone, 4-benzoyl-4'-methyl-diphenyl sulfide, acrylated benzophenone, 3,3',4,4'-tetra(t-butylperoxycarbonyl)benzophenone, and 3,3'-dimetyl-4-methoxybenzophenone; and aminobenzophenone compounds such as 4,4'-bis(dimethylamino)benzophenone and 4,4'-bis(ethylamino)benzophenone. Polymeric benzophenone derivatives are also usable. Specific examples of the polymeric benzophenone derivatives include GENOPOL BP-2 (available from RAHN AG). At least one of these photoinitiators is usable and a plurality of them may be used in combination. Polymeric benzophenone derivatives are preferred among these.

Examples of the thioxanthone photoinitiators include thioxanthone, 2-isopropylthioxanthone, 2-dodecylthioxanthone, 2-cyclohexylthioxanthone, 2,4-diethylthioxanthone, 2,4-dimethylthioxanthone, 1-phenoxythioxanthone, 1-methoxycarbonylthioxanthone, 2-ethoxycarbonylthioxanthone, 3-(2-methoxyethoxycarbonyl)-thioxanthone, 4-butoxycarbonylthioxanthone, 3-butoxycarbonyl-7-methylthioxanthone, 3,4-di-[2-(2-methoxyethoxy)-ethoxycarbonyl]-thioxanthone, 2-chlorothioxanthone, 1-ethoxycarbonyl-3-ethoxythioxanthone, 1-ethoxycarbonyl-3-chlorothioxanthone, 1-chloro-4-n-propoxythioxanthone, 2-methyl-6-dimethoxymethyl-thioxanthone, 2-methyl-6-(1,1-dimethoxybenzyl)-thioxanthone, 6-ethoxycarbonyl-2-methoxy-thioxanthone, 6-ethoxycarbonyl-2-methylthioxanthone, 1-ethoxycarbonyl-3-(1-methyl-1-morpholinoethyl)-thioxanthone, 2-morpholinomethylthioxanthone, 2-methyl-6-morpholinomethylthioxanthone, thioxanthone-2-carboxylic acid polyethylene glycol ester, and polybutylethyleneglycol bis(9-oxo-9H-thioxanthenyloxy)acetate. At least one of these photoinitiators is usable and a plurality of them may be used in combination.

Examples of the ketosulfone photoinitiators include 1-[4-(4-benzoylphenylsulfanyl)phenyl]-2-methyl-2-(4-methylphenylsulfonyl)propan-1-one. At least one of these photoinitiators is usable and a plurality of them may be used in combination. Preferred among these is 1-[4-(4-benzoylphenylsulfanyl)phenyl]-2-methyl-2-(4-methylphenylsulfonyl)propan-1-one.

Among these Type II photoinitiators (d-2), benzophenone photoinitiators and ketosulfone photoinitiators are preferred, with combinations of benzophenone photoinitiators and ketosulfone photoinitiators being more preferred. When a combination of a benzophenone photoinitiator and a ketosulfone photoinitiator is used, the benzophenone photoinitiator:ketosulfone photoinitiator ratio (by mass) may be 10:90 to 90:10 and is preferably 20:80 to 80:20.

In view of misting resistance and low migration, preferred are Type II photoinitiators (d-2) having a number average molecular weight of 300 or more, more preferably 500 or more. Those having a number average molecular weight of 1500 or less are also usable. Examples of Type II photoinitiators (d-2) having such features include polybutylethyleneglycol bis(9-oxo-9H-thioxanthenyloxy)acetate, polymeric benzophenone derivatives, and 1-[4-(4-benzoylphenylsulfanyl)phenyl]-2-methyl-2-(4-methylphenylsulfonyl)propan-1-one.

The photoinitiator content in the active energy-curable ink composition preferably includes a Type I photoinitiator (d-1) and a Type II photoinitiator (d-2). The photoinitiator content may include the respective photoinitiators in any proportions. For example, the Type I photoinitiator (d-1):Type II photoinitiator (d-2) ratio (by mass) may be 10:90 to 90:10 and is preferably 20:80 to 60:40. When the ratio is within the above range, the advantageous effect of the present invention can be more sufficiently achieved.

It is not intended to exclude the use of photoinitiators other than those described above as photoinitiators in the active energy-curable ink composition. When a photoinitiator other than those described above is used, the amount of the photoinitiator based on the total amount of photoinitiators in the active energy-curable ink composition may be, for example, 10% by mass or less, preferably 5% by mass or less.

### Co-photoinitiator (d-3)

In the active energy-curable ink composition of the present invention, a co-photoinitiator (d-3) may be added to the photoinitiator (D). Examples of the co-photoinitiator include thioxanthone co-photoinitiators and amine co-photoinitiators. At least one of these co-photoinitiators is usable and a plurality of them may be used in combination. Amine co-photoinitiators are preferred among these.

Examples of the thioxanthone co-photoinitiators include thioxanthone, 2-isopropylthioxanthone, 2-dodecylthioxanthone, 2-cyclohexylthioxanthone, 2,4-diethylthioxanthone, 2,4-dimethylthioxanthone, 1-phenoxythioxanthone, 1-methoxycarbonylthioxanthone, 2-ethoxycarbonylthioxanthone, 3-(2-methoxyethoxycarbonyl)-thioxanthone, 4-butoxycarbonylthioxanthone, 3-butoxycarbonyl-7-methylthioxanthone, 3,4-di-[2-(2-methoxyethoxy)-ethoxycarbonyl]-thioxanthone, 2-chlorothioxanthone, 1-ethoxycarbonyl-3-ethoxythioxanthone, 1-ethoxycarbonyl-3-chlorothioxanthone, 1-chloro-4-n-propoxythioxanthone, 2-methyl-6-dimethoxymethyl-thioxanthone, 2-methyl-6-(1,1-dimethoxybenzyl)-thioxanthone, 6-ethoxycarbonyl-2-methoxy-thioxanthone, 6-ethoxycarbonyl-2-methylthioxanthone, 1-ethoxycarbonyl-3-(1-methyl-1-morpholinoethyl)-thioxanthone, 2-morpholinomethylthioxanthone, 2-methyl-6-morpholinomethylthioxanthone, thioxanthone-2-carboxylic acid polyethylene glycol ester, and polybutylethyleneglycol bis(9-oxo-9H-thioxanthenyloxy)acetate.

Among the amine co-photoinitiators, tertiary amines are preferred, and examples include aliphatic amines such as triethanolamine, methyldiethanolamine, and triisopropanolamine; and aromatic amines such as 4,4'-diethylaminobenzophenone, ethyl 2-(dimethylamino)benzoate, ethyl 4-(dimethylamino)benzoate, isoamyl 4-(dimethylamino)benzoate, and (dimethylamino)benzoate esters with branched polyols. Aromatic amines are preferred among these, with (dimethylamino)benzoate esters with branched polyols being more preferred.

Among these co-photoinitiators (d-3), polybutylethyleneglycol bis(9-oxo-9H-thioxanthenyloxy)acetate, which is a thioxanthone co-photoinitiator, 4,4'-diethylaminobenzophenone, and (dimethylamino)benzoate esters with branched polyols are preferred in view of misting resistance and low migration.

The amount of co-photoinitiators (d-3) may be in the range of 0.01 to 50% by mass, preferably 0.1 to 40% by mass, based on the amount of photoinitiators. The lower limit is more preferably 1% by mass or more, particularly preferably 10% by mass or more.

It is more preferred to use, as photoinitiators (D), a Type I photoinitiator (d-1) that is a combination of an α-hydroxyalkylphenone photoinitiator and an acylphosphine oxide photoinitiator, and a Type II photoinitiator (d-2) that is a combination of a benzophenone photoinitiator and a ketosulfone photoinitiator. Further, it is preferred to include an amine co-photoinitiator as a co-photoinitiator (d-3).

The total amount of Type I photoinitiators (d-1), Type II photoinitiators (d-2), and co-photoinitiators (d-3) based on 100% by mass of the amount of photoinitiators (D) is preferably 80% by mass or more, more preferably 90% by mass or more, still more preferably 95% by mass or more, particularly preferably 98% by mass or more, and may be 100% by mass.

The total amount of Type I photoinitiators (d-1) and Type II photoinitiators (d-2) based on 100% by mass of the amount of photoinitiators (D) is preferably 1 to 99% by mass, more preferably 10 to 90% by mass, still more preferably 20 to 90% by mass, particularly preferably 55 to 75% by mass.

### Other additives

The active energy ray-curable ink composition of the present invention may contain various additives depending on the purpose, and examples of such additives include stabilizers (e.g., polymerization inhibitors such as hydroquinone, methoquinone, and methylhydroquinone), fillers, viscosity modifiers, extender pigments, waxes, and dispersants. These additives may be used alone or in admixture of two or more. The amount of stabilizers contained in the active energy ray-curable ink composition is preferably in the range of 0.01 to 2% by mass, more preferably 0.05 to 1% by mass, based on the total amount of the active energy ray-curable ink composition.

An extender pigment may be added to the active energy ray-curable ink composition of the present invention. The term "extender pigment" refers to a component that can impart proper printability, viscoelasticity, and other properties to the active energy ray-curable ink composition, and various extender pigments usually used in the preparation of active energy ray-curable ink compositions can be used. Examples of such extender pigments include clay, kaolinite (kaolin), barium sulfate, magnesium sulfate, calcium carbonate, silicon oxide (silica), bentonite, talc, mica, and titanium oxide. Silica or talc is most preferred among the extender pigments described above. The amount of these extender pigments added may be, but is not limited to, about 0.1 to 10% by mass based on the total amount of the active energy ray-curable ink composition.

A wax may be added to the active energy ray-curable ink composition of the present invention in order to improve abrasion resistance, blocking resistance, and other properties. Examples of the wax include waxes such as paraffin wax, carnauba wax, beeswax, microcrystalline wax, polyethylene wax, oxidized polyethylene wax, polytetrafluoroethylene wax, and amide wax, and fatty acids having a number of carbon atoms in the range of about 8 to 18, such as coconut oil fatty acids and soybean oil fatty acids. Polyethylene wax is most preferred among the waxes described above. The amount of these waxes added may be, but is not limited to, about 0.1 to 10% by mass based on the total amount of the active energy ray-curable ink composition.

Different types of dispersants such as high-molecular-weight dispersants and low-molecular-weight dispersants can be selected depending on the dispersing properties. Pigment derivatives may be used as dispersing aids.

The active energy ray-curable ink composition of the present invention can be prepared by mixing an allylic polymer (B) with a pigment (A), an ethylenically unsaturated compound (C), and a photoinitiator (D), and optionally any of the following additives: stabilizers (e.g., polymerization inhibitors such as hydroquinone, methoquinone, and methylhydroquinone), fillers, viscosity modifiers, extender pigments, waxes, and dispersants. The active energy ray-curable ink composition of the present invention can be cured by exposure to light. The light used for curing is generally ultraviolet rays.

The curing reaction of the active energy ray-curable ink composition can be carried out using any curing apparatus under any curing conditions, and methods usually used for photocuring reactions may be used.

The active energy ray-curable ink composition of the present invention can be used in any application. Examples of the application include printing inks such as photocurable lithographic printing inks, silk screen inks, and gravure inks. The active energy ray-curable ink composition is also usable in technical fields of coating materials for paper, plastic, metal, wood, and other materials (e.g., overprint varnish), adhesives, photoresists, etc. In particular, the active energy ray-curable ink composition can be widely applied to toys and various food packaging materials, where safety and hygiene are important, as well as to applications for packaging or filling sanitary products, cosmetics, pharmaceuticals, etc.

An example of a general method for preparing an active energy ray-curable ink composition is as follows.
An allylic polymer (B) and a stabilizer, etc. may be dissolved in an ethylenically unsaturated compound (C) with stirring at a temperature of 60°C to 100°C to prepare a varnish. The varnish may be mixed with a pigment (A), a photoinitiator (D), and other additives with stirring using a butterfly mixer, followed by mixing the mixture using a three-roll mill or other device, whereby an ink composition can be obtained.

### (Examples)

The present invention is described in greater detail below referring to examples. The present invention is not limited to the examples.

### Measurement of weight average molecular weight (Mw) and molecular weight distribution (Mw/Mn) of allylic polymer

The weight average molecular weight (Mw) and the molecular weight distribution (Mw/Mn) were measured by GPC. The weight average molecular weight was relative to polystyrene standards.
Column: Shodex KF-806L, KF-804, KF-803, KF-802, and KF-801 connected in series
Flow rate: 1.0 mL/min
Temperature: 40°C
Detector: RID-6A
Specimen: Twenty milligrams of a specimen was dissolved in 10 mL of tetrahydrofuran to prepare a measurement sample.

### Production Example 1: Synthesis of diallyl 1,2-cyclohexanedicarboxylate polymer

Diallyl 1,2-cyclohexanedicarboxylate was produced by an esterification reaction between cyclohexanedicarboxylic anhydride and allyl alcohol.

To a 3 L separable flask were added 2400 g of diallyl 1,2-cyclohexanedicarboxylate and then 60 g of benzoyl peroxide, and they were stirred while heating at 80°C. After 2.5 hours of reaction, the contents were cooled to 30°C. After the cooling, methanol was added to the flask to precipitate a polymer. The obtained polymer was dried under reduced pressure at 40°C for 16 hours (obtained amount: 408 g, yield: 17%, Mw = 32,000, Mw/Mn = 2.8). The resulting polymer was used as Polymer 1 in the following.

### Examples 1 to 7, Comparative Example 1

Active energy ray-curable ink compositions with the formulations shown in Tables 3 and 4 below were prepared. The properties of the active energy ray-curable ink compositions were evaluated.

### 1) Preparation of active energy ray-curable resin composition

Active energy ray-curable resin compositions (compositions A to C) with the formulations shown in Table 1 were prepared.

**[Table 1]**

| | | Composition A | Composition B | Composition C |
|---|---|---|---|---|
| Allylic polymer | Polymer 1 | 40 | | |
| DAP A *1 | Polymer 2 | | 35 | |
| ISO DAP *2 | Polymer 3 | | | 36 |
| Ethylenically unsaturated compound | PPTTA *3 | 60 | 65 | 64 |
| Polymerization inhibitor | MHQ *4 | 0.5 | 0.5 | 0.5 |

| | | | | |
|---|---|---|---|---|
| * The numbers in the table are in parts by mass. *1: Diallyl phthalate resin (ortho isomer) *2: Diallyl phthalate resin (iso isomer, meta orientation) *3: PPTTA: Pentaerythritol alkoxytetraacrylate EBECRYL 40 (Daicel-Allnex Ltd.) *4: MHQ: Methylhydroquinone (FUJIFILM Wako Pure Chemical Corporation) | | | | |

### 2) Preparation of photoinitiator mixture

A photoinitiator mixture (Mixture 1) as shown in Table 2 was prepared by heating and stirring.

**[Table 2]**

| Type | Trade name | Mixture 1 |
|---|---|---|
| Type I acylphosphine oxide photoinitiator | Omnirad 819 *1 | 12 |
| Type II benzophenone photoinitiator | GENOPOL BP-2 *2 | 19 |
| Hydrogen donor (amine co-photoinitiator) | GENOPOL AB-2 *3 | 36 |
| Type II ketosulfone photoinitiator | ESACURE 1001 M *4 | 12 |
| Type I α-hydroxyalkylphenone photoinitiator | ESACURE KIP 160 *5 | 21 |

| | | |
|---|---|---|
| * The numbers in the table are in parts by mass. *1: Omnirad 819 (bis(2,4,6-trimethylbenzoyl)-phenylphosphine oxide; number average molecular weight: 418) available from IGM Resins B.V. *2: GENOPOL BP-2 (polymeric benzophenone derivative; number average molecular weight: 980) available from RAHN AG *3: GENOPOL AB-2 ((dimethylamino)benzoate ester with branched polyol; number average molecular weight: 900) available from RAHN AG *4: ESACURE 1001 M (1-[4-(4-benzoylphenylsulfanyl)phenyl]-2-methyl-2-(4-methylphenylsulfonyl)propan-1-one; number average molecular weight: 515) available from IGM Resins B.V. *5: ESACURE KIP 160 (2-hydroxy-1-{4-[4-(2-hydroxy-2-methylpropionyl)phenoxy]phenyl}-2-methylpropanone; number average molecular weight: 342) available from IGM Resins B.V. | | |

### 3) Preparation of active energy ray-curable ink compositions 1 to 8 (Examples 1 to 7, Comparative Example 1)

The compositions A to C prepared in the section 1) were mixed with the components shown in Table 3 or 4 using a three-roll mill to prepare active energy ray-curable ink compositions 1 to 8. The properties of the inks were evaluated.

**[Table 3]**

| | | Composition 1 | Composition 2 | Composition 3 | Composition 4 |
|---|---|---|---|---|---|
| Resin composition | Composition A *1 | 40 | 42 | 45 | |
| | Polyester acrylate oligomer *2 | | | | 40 |
| Ethylenically unsaturated compound | PPTTA *3 | 18.5 | 18.5 | 18.5 | 18.5 |
| Dispersant | Polymeric dispersant *4 | 2.5 | 2.5 | 2.5 | 2.5 |
| Photoinitiator | Mixture 1 *5 | 11.5 | 9.5 | 6.5 | 11.5 |
| Pigment | Black pigment *6 | 18 | 18 | 18 | 18 |
| | Blue pigment *7 | 2.5 | 2.5 | 2.5 | 2.5 |
| | Red pigment *8 | 0.5 | 0.5 | 0.5 | 0.5 |
| Extender pigment | Talc *9 | 3.5 | 3.5 | 3.5 | 3.5 |
| | Silica *10 | 1 | 1 | 1 | 1 |
| Wax | Polyethylene wax *11 | 1 | 1 | 1 | 1 |
| Polymerization inhibitor | Polymerization inhibitor compound *12 | 1 | 1 | 1 | 1 |

| | | | | | |
|---|---|---|---|---|---|
| * The numbers in the table are in parts by mass. | | | | | |

**[Table 4]**

| | | Composition 5 | Composition 6 | Composition 7 | Composition 8 |
|---|---|---|---|---|---|
| Resin composition | Composition B *13 | 40 | 45 | | |
| | Composition C *14 | | | 40 | 45 |
| Ethylenically unsaturated compound | PPTTA *3 | 18.5 | 18.5 | 18.5 | 18.5 |
| Dispersant | Polymeric dispersant *4 | 2.5 | 2.5 | 2.5 | 2.5 |
| Photoinitiator | Mixture 1 *5 | 11.5 | 6.5 | 11.5 | 6.5 |
| Pigment | Black pigment *6 | 18 | 18 | 18 | 18 |
| | Blue pigment *7 | 2.5 | 2.5 | 2.5 | 2.5 |
| | Red pigment *8 | 0.5 | 0.5 | 0.5 | 0.5 |
| Extender pigment | Talc *9 | 3.5 | 3.5 | 3.5 | 3.5 |
| | Silica *10 | 1 | 1 | 1 | 1 |
| Wax | Polyethylene wax *11 | 1 | 1 | 1 | 1 |
| Polymerization inhibitor | Polymerization inhibitor compound *12 | 1 | 1 | 1 | 1 |

| | | | | | |
|---|---|---|---|---|---|
| * The numbers in the table are in parts by mass. *1: Composition A prepared in the section 1) *2: Polyester acrylate oligomer EBECRYL LEO 10801 (available from DAICEL-ALLNEX LTD.) *3: PPTTA: pentaerythritol alkoxytetraacrylate EBECRYL 40 (available from DAICEL-ALLNEX LTD.) *4: Solsperse 39000 (available from Lubrizol Japan Limited) *5: Photoinitiator mixture 1 prepared in the section 2) *6: Black pigment RAVEN 1060 ULTRA POWDER (available from Birla Carbon) *7: Blue pigment FASTOGEN BLUE FA5375 (available from SunChemical) *8: Red pigment SYMULER BRILLIANT CARMINE 6B350K (available from SunChemical) *9: Talc: NICRON 674 (available from Imerys) *10: Silica: CAB-O-SIL M7D (available from Cabot Corporation) *11: Polyethylene wax: S-394-N1 (available from Shamrock) *12: Polymerization inhibitor FLORSTAB UV-1 (available from KROMACHEM LTD) *13: Composition B prepared in the section 1) *14: Composition C prepared in the section 1) | | | | | |

### 4) Drying property test

The compositions 1 to 8 were each applied to a single-sided art paper (available from Oji Paper Company) using an RI tester to form a coated film on the surface of the single-coated art paper. The single-sided art paper coated with each composition was put on a conveyor belt and passed through a high-pressure mercury lamp with an output of 120 W/cm (distance from lamp: 11 cm) several times at a conveyor speed of 50 m/min until the coated film became tack-free. Here, the UV curing device used was a conveyor system for UV curing available from EYE GRAPHICS COMPANY. A smaller number of passages indicates higher drying properties. Tables 5 and 6 show the evaluation results.

### 5) Misting resistance test

A single-sided art paper was set below a rubber roll of an inkometer (available from Toyo Seiki Seisaku-sho, Ltd.). The ink was applied to the roll, which was then rotated at 400 rpm for one minute and then at 1200 rpm for two minutes. The single-sided art paper was visually observed for the presence of ink stains scattered on the paper and evaluated based on the following criteria.
Tables 5 and 6 show the evaluation results.

### Evaluation criteria: no stains on the paper: ∘, a few stains on the paper: △, many stains on the paper: ×

**[Table 5]**

| | Example 1 | Example 2 | Example 3 | Comparative Example 1 |
|---|---|---|---|---|
| Composition | Composition 1 | Composition 2 | Composition 3 | Composition 4 |
| Drying properties (Number of UV exposures) | Twice | Three times | Four times | Four times |
| Misting resistance | ○ | ○ | ○ | × |

**[Table 6]**

| | Example 4 | Example 5 | Example 6 | Example 7 |
|---|---|---|---|---|
| Composition | Composition 5 | Composition 6 | Composition 7 | Composition 8 |
| Drying properties (Number of UV exposures) | Twice | Three times | Twice | Three times |
| Misting resistance | ○ | ○ | ○ | ○ |

The results in Tables 5 and 6 demonstrated that the compositions of Examples 1 to 7 exhibited high misting resistance while having drying properties that were higher than or equal to those of conventional compositions.

## Claims

1. An active energy ray-curable ink composition, comprising:
at least one pigment (A);
at least one allylic polymer (B) obtained by polymerizing at least one allylic compound represented by Formula (I) below;
at least one ethylenically unsaturated compound (C); and
at least one photoinitiator (D),
the active energy ray-curable ink composition comprising at least 5.0% by mass of the photoinitiator (D), 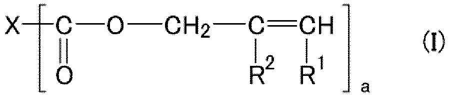
wherein R¹ and R² each represent H or CH₃;
X represents an a-valent alicyclic hydrocarbon group or an α-valent aromatic hydrocarbon group; and
a represents 2 or 3.

2. The active energy ray-curable ink composition according to claim 1,
wherein the photoinitiator (D) comprises at least one Type I photoinitiator (d-1) and at least one Type II photoinitiator (d-2).

3. The active energy ray-curable ink composition according to claim 2,
wherein the Type I photoinitiator (d-1) is at least one selected from the group consisting of α-hydroxyalkylphenone photoinitiators, α-aminoalkylphenone photoinitiators, and acylphosphine oxide photoinitiators, and
the Type II photoinitiator (d-2) is at least one selected from the group consisting of benzophenone photoinitiators, thioxanthone photoinitiators, and ketosulfone photoinitiators.

4. The active energy ray-curable ink composition according to claim 1 or 2, further comprising at least one co-photoinitiator (d-3).

5. The active energy ray-curable ink composition according to claim 1 or 2,
wherein X in Formula (I) has any of the following cyclic backbones:

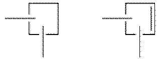

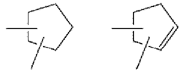

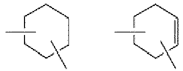

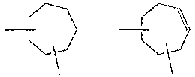

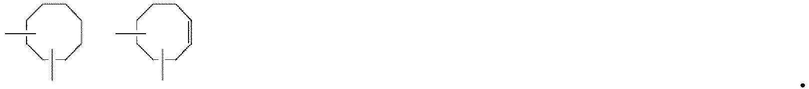

6. The active energy ray-curable ink composition according to claim 1 or 2,
wherein X in Formula (I) is a C6-C20 aromatic hydrocarbon group.

7. The active energy ray-curable ink composition according to claim 1 or 2,
wherein X in Formula (I) has the following cyclic backbone:
